# EUROPEAN PATENT APPLICATION

(11) **EP 4 610 017 A1**
(43) Date of publication of application: **03.09.2025**
(21) Application number: 24769847.5
(22) Date of filing: 07.03.2024
(51) Int. Cl.: B29C 45/14

(54) **DEVICE UNIT FOR MULTI-ELEMENT MATERIAL HYBRID FORMING BY ONE-TIME MOLD OPENING AND CLOSING**

(30) Priority: 13.03.2023 CN 202310236078
(71) Applicant: INTELLIGENT AEROSPACE MANUFACTURING TECHNOLOGY (BEIJING) CO., LTD., Beijing 100083 (CN)
(72) Inventor: CHENG, Pengzhi, Beijing 100083 (CN); LI, Xiaoqiang, Beijing 100083 (CN); XIE, Yasu, Beijing 100083 (CN); CHENG, Gang, Beijing 100083 (CN); RUAN, Shangwen, Beijing 100083 (CN); ZHANG, Shenglun, Beijing 100083 (CN); SONG, Kai, Beijing 100083 (CN); DING, Zhen, Beijing 100083 (CN)
(74) Representative: Bayramoglu et al.
(86) International application number: PCT/CN2024/080591
(87) International publication number: WO 2024/188154

(57) **Abstract**

A multi-material hybrid forming device main machine based on single mold opening and closing includes a main machine frame and an injection module, where the injection module includes a mounting plate; a lower beam of a mold frame is detachably connected to the mounting plate; the mounting plate is provided with a metal injection runner port, a non-metal injection runner port, and a bulging medium port; and the mounting plate is replaceable to achieve rapid replacement of an injection material. The present disclosure is based on a universal integrated mold frame. By providing different injection modules, different metal and non-metal injection devices are integrated onto a single device main machine, reducing device costs while enhancing forming efficiency. The present disclosure achieves injection of a non-metal (e.g., plastic, fiber-reinforced resin), a metal (e.g., aluminum/magnesium/aluminum-magnesium alloy), and various bulging media in a single mold opening and closing cycle.

## Description

### TECHNICAL FIELD

The present disclosure belongs to an automotive tubular beam component production method, and in particular to a multi-material hybrid forming device main machine based on single mold opening and closing.

### BACKGROUND TECHNOLOGY

The design and processing techniques of tubular beam structural components determine vehicle evaluation metrics such as safety, reliability/durability, and noise, vibration, and harshness (NVH). However, traditional integrated die-casting and stamping-welding processes used in manufacturing steel tubular beam structures exhibit certain limitations in enhancing vehicle performance and lightweight optimization.

Although an integrated die-casting process has been widely adopted in the automotive industry, it is constrained by casting-suitable materials such as aluminum alloys and magnesium alloys with insufficient strength (yield strength around 300 MPa). Consequently, this process is not suitable for manufacturing slim tubular beam structural components and sub-assemblies in upper body structures, such as A-pillar and B-pillar sub-assembly components. The integrated die-casting of large automotive components such as body side panels presents challenges including excessive mold closing force, significant component deformation, insufficient local strength in slim components such as A-pillar tubular beams, along with complex manufacturing processes and high costs.

The integrated injection molding process for traditional tubular beams and connectors is confined to finished tubular beams and post-hydroforming injection molding. It fails to apply treatments such as heating, conformal gas bulging, and quenching to the main load-bearing tube blanks, thereby compromising the geometry and mechanical strength of profiled tubular beams. Furthermore, this process introduces an additional connection procedure instead of integrating the synchronous procedure such as aluminum/magnesium injection.

The existing hydroforming process for tubular components involves sealing both ends of the metal tube in a cold state, and injecting a high-pressure liquid into the tube cavity to force the raw metal tube to conform to the mold. It typically uses a hydroforming machine, featuring cold-state liquid filling and low-yield-strength materials. Ultra-high-strength titanium alloys with elevated yield strength are unsuitable for hydroforming due to their incompatibility with cold-state processing and the requirement for an excessively high mold closing force.

Hybrid forming targets cold-state formed components, such as those to be assembled on metal structural components through plastic fasteners (e.g., automotive instrument panel brackets). The current hybrid forming process combines tube hydroforming with injection molding to form an integrated structure within a single process cycle. However, this method employs simplified temperature control with forming temperatures only around 200°C, which excludes quenching processes.

In summary, existing hot gas bulging, injection molding, die-casting, and hydroforming processes are all single-stage operations incapable of producing composite-structured components. Besides, the hybrid forming is limited to cold-formed components and unsuitable for high-strength materials.

To ensure that the body structures meet rigidity, strength, and lightweight requirements, the present disclosure proposes a multi-material hybrid forming device main machine based on single mold opening and closing. The multi-material includes metal materials such as ultra-high-strength steel/aluminum alloy tubes and aluminum/magnesium, and non-metal materials such as fiber-reinforced resins. The ultra-high-strength steel tube (e.g. aluminum alloy tube) is subjected to instantaneous heating, conformal gas bulging, quench hardening, injection molding (non-metal materials such as fiber-reinforced resins), and aluminum/magnesium (metal) injection in a single mold opening and closing cycle. The present disclosure greatly simplifies a body manufacturing process and eliminates subsequent welding and other processes, thereby enabling lightweight tubular beam structural components, and suiting integrated manufacturing of ultra-high-strength tubular beam structures with profiled cross-sections.

### CONTENT OF THE INVENTION

In view of the technical problems in the prior art, the present disclosure provides a multi-material hybrid forming device main machine based on single mold opening and closing, including an upper beam, a slider, a lower beam, a mold, and an injection module, where the device main machine is configured to form different components through different molds; the mold includes an upper mold fixed to the slider and a lower mold fixed to the lower beam; and the slider is configured to drive the upper mold to be closed with the lower mold;
the mold includes a hot gas bulging cavity for a metal tube blank, a forming cavity for a metal material, and a forming cavity for a non-metal material;
the injection module is fixed on the lower beam, and the lower beam is provided with a plurality of holes;
the injection module includes a mounting plate; the lower beam is detachably connected to the mounting plate of the injection module; and the mounting plate is replaceable to achieve rapid replacement of an injection material;
the mounting plate is provided with a metal injection runner port and a non-metal injection runner port; and
an end of the metal injection runner port and an end of the non-metal injection runner port are communicated with an interior of the mold through a part of the holes in the lower beam.

The mounting plate is further provided with a bulging medium port, and an end of the bulging medium port is communicated with the interior of the mold through a part of the holes in the lower beam.

The metal injection runner port or the non-metal injection runner port is connected to a medium system; and the medium system is configured to perform loading, pressure maintenance and recovery of bulging media at different pressures.

A side-push oil cylinder is respectively provided on two sides of an upper end of the lower beam; and the two side-push oil cylinders are configured to seal two ends of the metal tube blank in a forming process; and
the two sealed ends of the metal tube blank are each provided with a high-pressure bulging medium port; and the high-pressure bulging medium port is configured to perform loading, pressure maintenance and recovery of an ultra-high-pressure bulging medium during a hot gas bulging process of the metal tube blank, and is configured to simultaneously output a low-pressure bulging medium.

The non-metal injection runner port is connected to a non-metal material injection barrel; and the non-metal material injection barrel is configured to accommodate a non-metal medium required for component forming, and possesses heating and stirring functions to melt a solid non-metal medium into a liquid or semi-solid non-metal medium for injection into the interior of the mold.

The metal injection runner port is connected to a metal material injection barrel; and the metal material injection barrel is configured to accommodate a metal medium required for component forming, and possesses heating and stirring functions to melt a solid metal medium into a liquid or semi-solid metal medium for injection into the interior of the mold.

The upper mold and the lower mold are internally provided with a medium runner, and the medium runner is configured to heat or cool the interior of the mold.

Four guide tie bars are fixedly connected to peripheries of the upper beam and the lower beam to form a main machine frame; and the guide tie bars are configured to guide movement of the slider.

The metal material is aluminum, magnesium, or an aluminum-magnesium alloy, and the non-metal material is a plastic or a composite material.

The lower beam is provided with an electrode, and a terminal of the electrode is connected to a high-power heating power supply through a conductor to perform heating during component forming.

The forming device main machine of the present disclosure is based on a universal integrated device main machine. By improving the injection module, different metal and non-metal injection devices are integrated onto a single device platform, reducing device costs while enhancing forming efficiency. The device main machine of the present disclosure achieves injection of a non-metal (e.g., plastic, fiber-reinforced resin), a metal (e.g., aluminum/magnesium/aluminum-magnesium alloy), and various bulging media.

The device of the present disclosure completes multiple processes of the ultra-high-strength metal tube blank (e.g., aluminum alloy tube) in a single mold opening and closing cycle: instantaneous heating, conformal gas bulging, quench hardening, non-metal (e.g., plastic, fiber-reinforced resin) injection, and metal (e.g., aluminum/magnesium/aluminum-magnesium alloy) injection. The present disclosure is suitable for integrated manufacturing of automotive sub-assembly components.

### DESCRIPTION OF THE DRAWINGS

FIG. 1 is a structural schematic diagram of a device main machine according to the present disclosure;
FIG. 2 is a structural schematic diagram of a lower beam according to the present disclosure;
FIG. 3 is a structural schematic diagram of an injection module according to the present disclosure; and
FIG. 4 is a process flowchart according to the present disclosure.

Reference Numerals: 21. drive unit (typically hydraulic cylinder or motor); 22. mold locking device; 23. upper beam; 24. guide tie bar; 25. slider; 26. lower beam; 27. injection module; 28. upper mold; 29. lower mold; 261. side-push oil cylinder; 262. electrode; 263. port; 271. mounting plate; 272. metal injection runner port; and 273. non-metal injection runner port.

### SPECIFIC IMPLEMENTATIONS

The following clearly and completely describes the technical solutions of the present disclosure with reference to drawings. Apparently, the described embodiments are merely some rather than all of the embodiments of the present disclosure. All other embodiments obtained by a person of ordinary skill in the art based on the embodiments of the present disclosure without creative efforts shall fall within the protection scope of the present disclosure.

In the description of the present disclosure, it should be noted that orientations or position relationships indicated by terms such as "center", "top", "bottom", "left", "right", "vertical", "horizontal", "inner", and "outer" are based on the orientation or position relationships shown in the drawings, for ease of describing the present disclosure and simplifying the description only, rather than indicating or implying that the indicated device or element must have a particular orientation or be constructed and operated in a particular orientation. Therefore, these terms should not be understood as a limitation to the present disclosure. Moreover, the terms "first", "second", and "third" are used only for the purpose of description, and are not intended to indicate or imply relative importance.

In the description of the present disclosure, it should be noted that, unless otherwise clearly specified, meanings of terms "mount", "connected with", and "connected to" should be understood in a broad sense. For example, the connection may be a fixed connection, a removable connection, or an integral connection; may be a mechanical connection or an electrical connection; may be a direct connection or an indirect connection by using an intermediate medium; or may be intercommunication between two elements. Those of ordinary skill in the art may understand specific meanings of the foregoing terms in the present disclosure based on a specific situation.

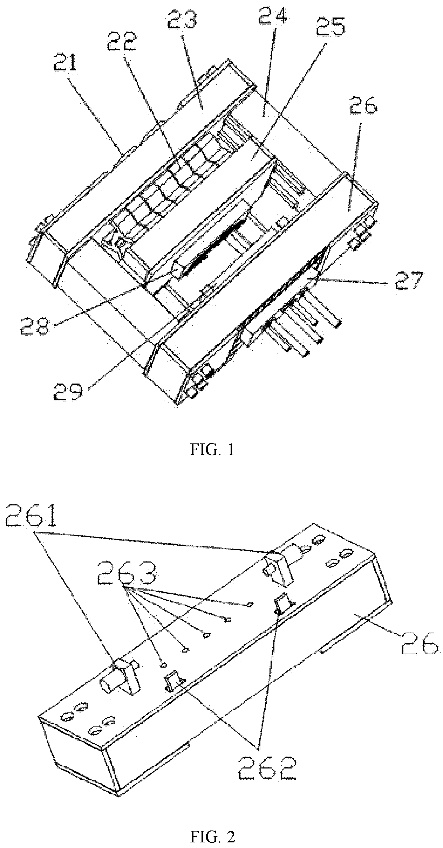

As shown in FIG. 1, a multi-material hybrid forming device main machine based on single mold opening and closing includes drive unit 21, mold locking device 22, upper beam 23, guide tie bars 24, slider 25, lower beam 26, and injection module 27. A mold includes upper mold 28 and lower mold 29. The lower mold 29 is fixed to the lower beam 26, and the upper mold 28 is fixed to the slider 25. The slider drives the upper mold 28 to be closed with the lower mold 29. The lower beam 26 is provided with the injection module 27.

Four guide tie bars 24 are fixedly connected to peripheries of the upper beam 23 and the lower beam 26 to form an integral frame. The drive unit 21 and the mold locking device 22 are provided on the upper beam 23. The drive unit provides power for movement of the slider 25, and provides a mold closing force for the device main machine. Preferably, the drive unit is a hydraulic cylinder or a motor. The mold locking device 22 locks the device main machine to a closed state. The mold locking device improves conformation in an interior of the mold and provides an auxiliary mold closing force to reduce output power of the drive unit 21. The guide tie bars 24 guide movement of the slider 25.

As shown in FIG. 2, a side-push oil cylinder 261 is respectively provided on two sides of an upper end of the lower beam. The two side-push oil cylinders 261 are configured to seal two ends of the metal tube blank during a forming process. The lower beam is provided with electrode 262. The electrode includes one terminal connected to a high-power heating power supply through a conductor and the other terminal connected to an electrode in the interior of the mold, and is configured to perform heating during component forming. The lower beam 26 is detachably connected to the injection module 27. The lower beam is provided with a plurality of holes.

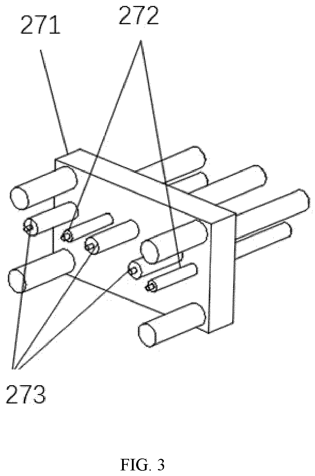

Specifically, as shown in FIG. 3, the injection module 27 includes mounting plate 271. The lower beam 26 is detachably connected to the mounting plate 271 of the injection module 27. The mounting plate 271 is provided with metal injection runner port 272, non-metal injection runner port 273 or a bulging medium port. An injection material is rapidly replaced through replacement of the mounting plate. The unloading conveyor line 3 conveys a formed workpiece and has a component buffering function. The unloading conveyor line typically adopts a stainless steel structure or a steel plate chain structure. The metal injection runner port 272, the non-metal injection runner port 273, and the bulging medium port are communicated with an interior of the mold through the plurality of holes of the lower beam.

The two sealed ends of the metal tube blank each are provided with a high-pressure bulging medium port. The high-pressure bulging medium port performs loading, pressure maintenance and recovery of an ultra-high-pressure bulging medium during hot gas bulging forming of the metal tube blank, as well as simultaneously outputting of a low-pressure bulging medium. Preferably, the bulging medium is any one of gas, water, oil or low-melting-point metal. Preferably, the bulging medium is nitrogen or inert gas, and the low-melting-point metal is tin.

The upper mold 28 and the lower mold 29 are internally provided with a medium runner. And the medium runner is configured to heat or cool a component in the interior of the mold.

The non-metal injection runner port 273 is connected to a non-metal material injection barrel. The non-metal material injection barrel accommodates a non-metal medium required for component forming, possesses heating and stirring functions, and melts a solid non-metal medium into a liquid or semi-solid non-metal medium for injection into the interior of the mold.

The metal injection runner port 272 is connected to a metal material injection barrel. The metal material injection barrel accommodates a metal medium required for component forming, possesses heating and stirring functions, and melts a solid metal medium into a liquid or semi-solid metal medium for injection into the interior of the mold.

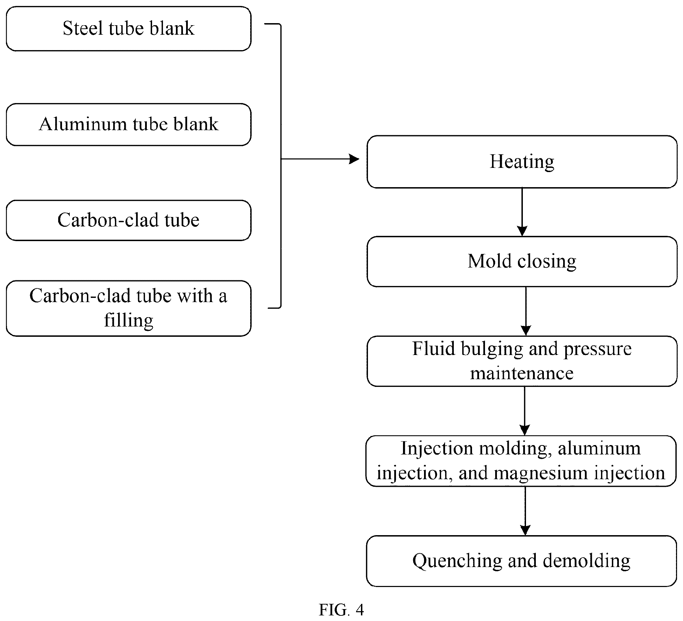

FIG. 4 illustrates core steps of a forming method using the above-mentioned multi-material hybrid forming device main machine based on single mold opening and closing. Specifically, the forming method includes the following steps.
S1. The metal tube blank is grasped and loaded into the interior of the mold.
S2. The drive unit drives the slider 25 to close the mold. The side-push oil cylinders move to seal the two ends of the metal tube blank by two end sealing plugs.
S3. The metal tube blank is heated through the electrode to a first specified temperature.

Preferably, the steps S3 and S2 are interchangeable in sequence.

S4. The metal tube blank is bulged. A first-pressure high-pressure bulging medium (e.g., high-pressure gas) is injected into an end port of the metal tube blank at one side. The first-pressure high-pressure bulging medium causes a wall of the metal tube blank to conform to the mold through high-pressure bulging. Meanwhile, a first-pressure bulging medium (e.g., low-pressure gas) is injected into a space inside the interior of the mold and outside the metal tube blank to control a deformation amount at a local position of the metal tube blank. Preferably, the first-pressure bulging medium is injected and withdrawn through the metal injection runner 15 and the non-metal injection runner 13, respectively.

S5. A metal is injected. The first-pressure bulging medium is depressurized and recovered. A temperature in the interior of the mold is adjusted to a second specified temperature. The second specified temperature is less than or equal to the first specified temperature. The metal injection barrel injects a liquid or semi-solid metal (e.g. aluminum-magnesium alloy) into a metal injection space inside the interior of the mold and outside the metal tube blank, causing the metal material to be integrally formed and bonded onto the metal tube blank bulged. During an entire process of injecting the metal, a third-pressure bulging medium is injected into the metal tube blank to control a deformation amount at a local position of the tube blank. During the entire metal injection process, a second-pressure bulging medium is injected into a space outside a metal injection space inside the interior of the mold and outside the metal tube blank to control a deformation amount at a local position of the metal tube blank.

S6. A non-metal is injected. The second-pressure bulging medium is depressurized and recovered. The temperature in the interior of the mold is adjusted to a third specified temperature. The third specified temperature is less than the first specified temperature and the second specified temperature. The non-metal injection barrel injects a liquid or semi-solid non-metal (e.g., plastic) into a non-metal injection space inside the interior of the mold and outside the metal tube blank, causing the non-metal material to be integrally formed and bonded onto the metal tube blank bulged. During the entire non-metal injection process, the ultra-high-pressure medium system injects a fourth-pressure bulging medium into the metal tube blank to control a deformation amount at a local position of the tube blank.

Preferably, the metal injection step S5 and the non-metal injection step S6 of the present disclosure are performable simultaneously to improve efficiency.

S7. The bulging medium is depressurized and recovered, and in-mold rapid quenching is performed.

It should be understood that the serial number of each step in the embodiment does not indicate the order of performing the process. The order of performing each process is determined by its function and internal logic, and should not limit the implementation of the embodiments of the present disclosure.

Although the embodiments of the present disclosure have been illustrated and described, it should be understood that those of ordinary skill in the art may make various changes, modifications, replacements and variations to the above embodiments without departing from the principle and spirit of the present disclosure, and the scope of the present disclosure is limited by the appended claims and their legal equivalents.

## Claims

1. A multi-material hybrid forming device main machine based on single mold opening and closing, comprising an upper beam, a slider, a lower beam, a mold, and an injection module, wherein the device main machine is configured to form different components through different molds; the mold comprises an upper mold fixed to the slider and a lower mold fixed to the lower beam; and the slider is configured to drive the upper mold to be closed with the lower mold;
**characterized in that**:
the mold comprises a hot gas bulging cavity for a metal tube blank, a forming cavity for a metal material, and a forming cavity for a non-metal material;
the injection module is fixed on the lower beam, and the lower beam is provided with a plurality of holes;
the injection module comprises a mounting plate; the lower beam is detachably connected to the mounting plate of the injection module; and the mounting plate is replaceable to achieve rapid replacement of an injection material;
the mounting plate is provided with a metal injection runner port and a non-metal injection runner port; and
an end of the metal injection runner port and an end of the non-metal injection runner port are communicated with an interior of the mold through a part of the holes in the lower beam.

2. The forming device main machine according to claim 1, **characterized in that** the mounting plate is further provided with a bulging medium port, and an end of the bulging medium port is communicated with the interior of the mold through a part of the holes in the lower beam.

3. The forming device main machine according to claim 1, **characterized in that** the metal injection runner port or the non-metal injection runner port is connected to a medium system; and the medium system is configured to perform loading, pressure maintenance and recovery of bulging media at different pressures.

4. The forming device main machine according to claim 1, **characterized in that** a side-push oil cylinder is respectively provided on two sides of an upper end of the lower beam; and the two side-push oil cylinders are configured to seal two ends of the metal tube blank in a forming process; and
the two sealed ends of the metal tube blank are each provided with a high-pressure bulging medium port; and the high-pressure bulging medium port is configured to perform loading, pressure maintenance and recovery of an ultra-high-pressure bulging medium during a hot gas bulging process of the metal tube blank, and is configured to simultaneously output a low-pressure bulging medium.

5. The forming device main machine according to any one of claims 1 to 4, **characterized in that** the non-metal injection runner port is connected to a non-metal material injection barrel; and the non-metal material injection barrel is configured to accommodate a non-metal medium required for component forming, and possesses heating and stirring functions to melt a solid non-metal medium into a liquid or semi-solid non-metal medium for injection into the interior of the mold.

6. The forming device main machine according to any one of claims 1 to 4, **characterized in that** the metal injection runner port is connected to a metal material injection barrel; and the metal material injection barrel is configured to accommodate a metal medium required for component forming, and possesses heating and stirring functions to melt a solid metal medium into a liquid or semi-solid metal medium for injection into the interior of the mold.

7. The forming device main machine according to any one of claims 1 to 4, **characterized in that** the upper mold and the lower mold are internally provided with a medium runner, and the medium runner is configured to heat or cool the interior of the mold.

8. The forming device main machine according to any one of claims 1 to 4, **characterized in that** four guide tie bars are fixedly connected to peripheries of the upper beam and the lower beam to form a main machine frame; and the guide tie bars are configured to guide movement of the slider.

9. The forming device main machine according to any one of claims 1 to 4, **characterized in that** the metal material is aluminum, magnesium, or an aluminum-magnesium alloy, and the non-metal material is a plastic or a composite material.

10. The forming device main machine according to any one of claims 1 to 4, **characterized in that** the lower beam is provided with an electrode, and a terminal of the electrode is connected to a high-power heating power supply through a conductor to perform heating during component forming.
